# FASCICULE DE BREVET EUROPEEN

(11) **EP 3 318 018 B1**
(45) Date de publication et mention de la délivrance du brevet: **24.07.2019**
(21) Numéro de dépôt: 16750904.1
(22) Date de dépôt: 30.06.2016
(51) Int. Cl.: H04L 12/28, H04W 8/00, H04W 60/00, H04W 76/10, H05B 37/02, G08C 17/02

(54) **PROCÉDÉS D'ENREGISTREMENT D'UNE UNITÉ CENTRALE DE COMMANDE APPARTENANT À UNE INSTALLATION DOMOTIQUE, ET PRODUITS PROGRAMMES D'ORDINATEUR CORRESPONDANTS**
VERFAHREN ZUM REGISTRIEREN EINER ZENTRALEN STEUEREINHEIT EINER HEIMAUTOMATISIERUNGSANLAGE UND ENTSPRECHENDE COMPUTERPROGRAMMPRODUKTE
METHODS FOR RECORDING A CENTRAL CONTROL UNIT BELONGING TO A HOME AUTOMATION FACILITY, AND CORRESPONDING COMPUTER PROGRAM PRODUCTS

(30) Priorité: 03.07.2015 FR 1556295
(43) Date de publication de la demande: 09.05.2018
(73) Titulaire: SOMFY ACTIVITES SA, 74300 Cluses (FR)
(72) Inventeur: COSSERAT, Hubert, 74100 Annemasse (FR); MICHEL, Florent, 07210 Chomerac (FR)
(74) Mandataire: Verriest, Philippe
(86) Numéro de dépôt international: PCT/FR2016/051634
(87) Numéro de publication internationale: WO 2017/006021

(56) Documents cités:
- US-A1- 2005 044 225
- US-A1- 2006 133 392

## Description

La présente invention concerne un procédé de d'enregistrement d'une unité centrale de commande appartenant à une installation domotique, le procédé étant exécuté par un terminal utilisateur. Elle concerne également un produit programme d'ordinateur correspondant. Elle concerne également un procédé d'enregistrement d'une unité centrale de commande appartenant à une installation domotique, le procédé étant exécuté par une unité de gestion. Elle concerne également un produit programme d'ordinateur correspondant.

Une installation domotique d'un bâtiment peut comprendre une pluralité de dispositifs domotiques. Il est connu de procéder à la configuration, à la commande et/ou à la supervision de ladite installation en utilisant une unité centrale de commande qui communique avec un ou plusieurs dispositifs domotiques.

L'enregistrement de l'unité centrale de commande et la configuration de l'installation nécessitent d'interagir avec l'unité centrale de commande.

Les opérations d'enregistrement peuvent être compliquées par la saisie de numéro de série ou d'identifiant de façon manuelle, ou encore par le fait que ces opérations doivent être réalisées sans accès à un réseau étendu permettant l'accès à une unité de gestion distante.

Le document US 2006/0133392 A1 correspond au préambule des revendications 1 et 12.

La présente invention a pour but de résoudre tout ou partie des inconvénients mentionnés ci-dessus.

A cet effet, la présente invention concerne un procédé d'enregistrement d'une unité centrale de commande appartenant à une installation domotique; le procédé étant exécuté par un terminal utilisateur, le procédé étant défini par la revendication 1.

Grâce aux dispositions selon l'invention, l'enregistrement ou la découverte de l'unité centrale de commande peut être réalisée de façon automatisée, sans saisie manuelle d'un identifiant d'installation.

De façon générale, l'ordre de présentation des étapes n'implique pas nécessairement un déroulement séquentiel. En particulier, les étapes i, ii et iii peuvent être interverties.

Le terminal utilisateur ou terminal de communication mobile peut être, par exemple, un téléphone intelligent, un ordinateur portable ou une tablette. Le terminal utilisateur peut contenir et exécuter un logiciel d'application.

Par installation, on entend un ensemble comprenant une pluralité de dispositifs domotiques et une pluralité d'unités de commande disposés dans un seul bâtiment ou sur une pluralité de lieux, chaque dispositif domotique étant relié à une unité électronique de commande parmi la pluralité d'unités électroniques de commande, la pluralité d'unités électroniques de commande formant un groupe sous le contrôle d'un utilisateur. Les dispositifs électroniques forment des groupes d'au moins un dispositif domotique rattaché à une unité électronique de commande.

Un même dispositif ou une même unité de commande peut appartenir à deux installations différentes sous la responsabilité de deux utilisateurs différents. A titre d'exemple, un dispositif domotique correspondant à un système de chauffage peut être compris dans une première installation domotique comprenant un ensemble des dispositifs compris dans un logement, sous le contrôle d'un utilisateur occupant le logement, et dans une seconde installation domotique comprenant un ensemble de dispositifs domotiques correspondant à des systèmes de chauffage disposés dans une pluralité de logement sous le contrôle d'un utilisateur administrateur des équipements de chauffage pour la pluralité de logements.

Il est à noter que l'on entend par dispositif domotique un équipement domotique et/ou un capteur, ou encore une partie d'équipement domotique ou une partie de capteur correspondant à un sous-ensemble fonctionnel.

Par unité centrale de commande de l'installation domotique, on entend une unité électronique comprenant au moins une unité de traitement pour contenir et exécuter au moins un programme d'ordinateur, comprenant au moins un module de communication destinée au contrôle et/ou à la commande d'au moins un dispositif domotique et au moins un module de communication avec une unité de gestion. L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

On entend par message un élément d'information notifié ou réceptionné sous la forme d'un appel synchrone ou asynchrone, pouvant également correspondre à un appel de fonction local ou distant.

Dans le mode de réalisation selon la revendication 3, il est possible d'utiliser plusieurs unités centrales de commandes au sein d'une même installation afin d'étendre le nombre de types de dispositifs domotiques ou le nombre de protocoles domotiques utilisables dans une même installation, ou d'augmenter le nombre de dispositifs total de l'installation, tout en conservant une identification de l'appartenance des différents dispositifs domotiques à une même installation.

Ainsi, l'interface présentée à l'utilisateur peut ainsi ajouter une couche d'abstraction pour cacher le rattachement effectif des dispositifs aux unités centrales de commande. L'interface représente ainsi les équipements domotiques, comme les volets, stores, systèmes HVAC ou d'éclairage, pilotables dans l'installation ainsi que les capteurs présents.

Ces dispositions sont obtenues sans communication entre les unités centrales de commande, mais simplement par le rattachement logique opéré lors de l'enregistrement.

Dans le mode de réalisation de la revendication 4, les dispositifs sont considérés comme rattachés à au même identifiant d'une installation, dans un groupe qui rassemble l'ensemble des dispositifs de l'installation rattachés indifféremment à la première ou à la seconde unité centrale de commande qui peut être communiqué à un utilisateur ou à une application tierce.

La présente invention concerne également un produit programme d'ordinateur selon la revendication 11.

La présente invention concerne également un procédé d'enregistrement d'une unité centrale de commande appartenant à une installation; le procédé étant exécuté par une unité de gestion et étant selon la revendication 12.

La présente invention concerne également un produit programme d'ordinateur selon la revendication 15. Les revendications dépendantes définissent des modes de réalisation.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant les relations entre une entité représentative d'une installation domotique, les unités centrales de commande et les dispositifs de l'installation domotique.

Les figure 4 et 5 sont des schémas illustrant un mode de mise en oeuvre d'un procédé d'enregistrement d'une unité centrale de commande d'une installation domotique selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

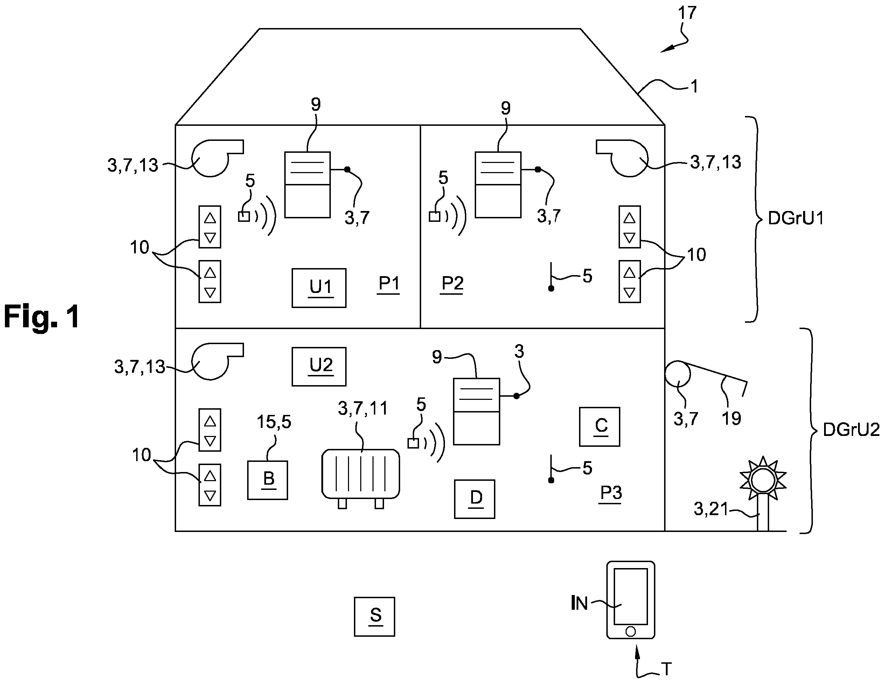

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dis positif D indifféremment pour désigner des capteurs ou des équipements domotiques, ou encore des parties d'équipements domotiques 3 ou de capteurs 5.

L'installation domotique 17 comprend une ou plusieurs unités centrales de commande U1, U2. En particulier et à titre d'exemple, deux unités centrales de commande U1, U2 sont représentées sur la figure 1.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des noeuds ou points d'extrémité dans le réseau local.

Le système d'adressage local peut être hiérarchique ou à plat, le format d'adresse pouvant être numérique ou alphanumérique.

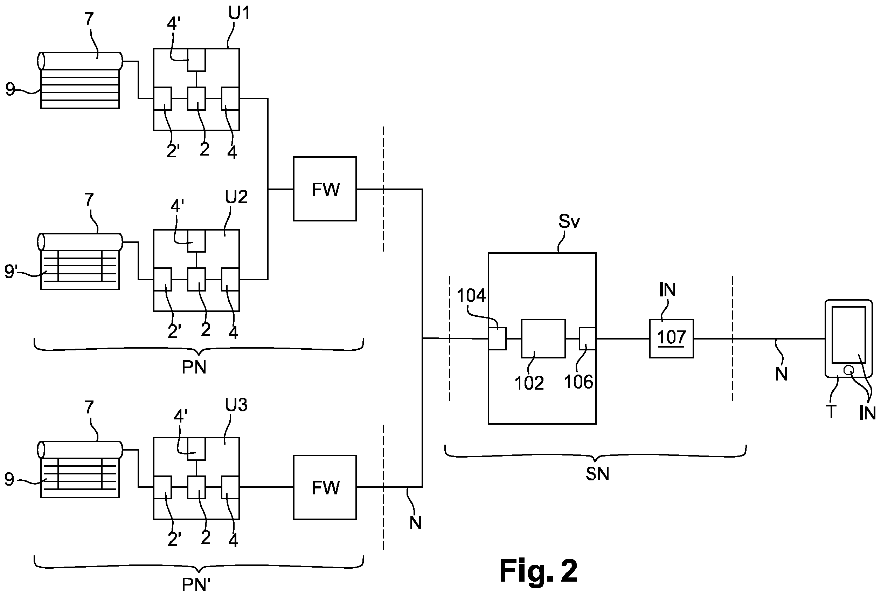

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un second réseau privé PN', indépendant du réseau privé PN correspondant à une seconde installation domotique. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en oeuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Chaque unité centrale de commande U comprend, en outre, un module de communication 4' pour communiquer selon un protocole de communication local, par exemple Bluetooth ou Wifi, avec un terminal de communication mobile ou terminal utilisateur T. Le terminal de communication mobile T peut contenir et exécuter un logiciel d'application APP.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Selon une autre possibilité, une installation 17 au sens de l'invention peut comprendre des dispositifs domotiques disposés sur une pluralité de lieux, avec au moins une unité centrale de commande sur chacun de ces lieux à laquelle sont rattachés les dispositifs domotiques, les unités centrales de commande U de l'installation étant placées sous le contrôle d'un utilisateur.

A titre d'exemple, une telle installation peut comprendre un ensemble de dispositifs domotiques constitués par des systèmes de chauffage répartis dans un ensemble de logements ou de locaux tertiaires, rattaché à un ensemble d'unité centrales de commande U, l'ensemble de dispositifs domotiques étant destiné à être commandé par un utilisateur spécifiques en charge du chauffage pour ledit ensemble de logements ou de locaux tertiaires.

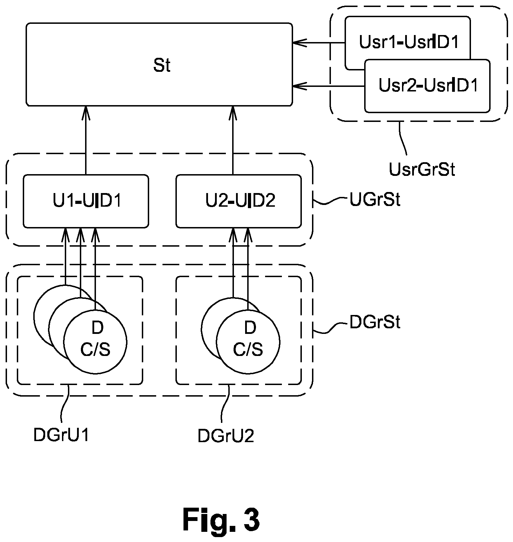

Nous allons à présent décrire, en référence à la figure 3, la représentation de l'installation 17 par une entité représentative St sur le serveur Sv, dans le cas où l'installation comprend de multiples unités centrales de commandes U.

Le système selon l'invention rattache plusieurs unités centrales de commande U à un seul objet St représentant une installation 17 par une configuration au niveau du serveur Sv.

Le serveur Sv peut ainsi présenter à l'utilisateur l'installation 17 comme un seul ensemble de dispositifs D à l'utilisateur, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

L'identification de l'entité représentative St de l'installation peut être selon un mode de réalisation réalisée par l'un quelconque des identifiants UID de l'une des unités centrales de commande U présente dans l'installation, par un identifiant de l'installation ou de l'utilisateur.

Ainsi, pour simplifier la désignation d'une installation dans les APIs publiques, il suffit que les utilisateurs de ces APIs fournissent un identifiant unique attachée à l'entité représentative St de l'installation 17.

De façon interne au serveur, un identifiant unique de l'entité représentative St de l'installation 17 peut exister pour faciliter l'implémentation.

Ainsi, l'entité représentative St peut être associée à une liste ou groupe de dispositifs DGrSt regroupant les dispositifs contenus dans les différents groupes DGrU1, DGrU2 attachés à chaque unité centrale de commande U1, U2, et à un groupe UGrSt des identifiants UID des unités centrales de commandes concernées U. Les dispositifs sont identifiés par un identifiant unique Une entité représentative d'une installation domotique peut être associée avec un utilisateur donné Usr1, identifié par un identifiant UsrID, correspondant par exemple à une combinaison login et mot de passe ou avec un groupe d'utilisateur donné UsrGrSt.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemId>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1. knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2. io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

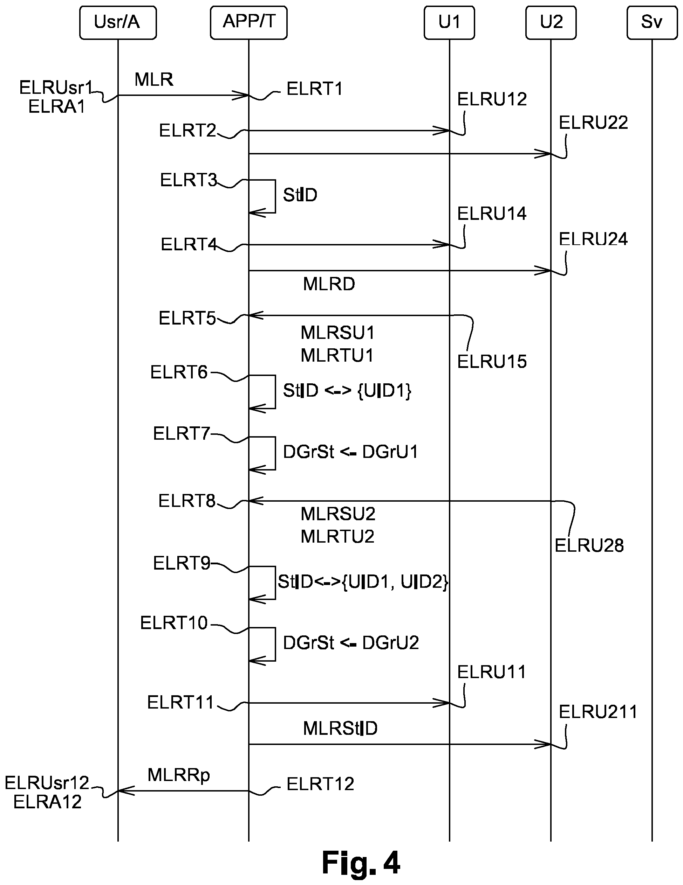

Un procédé d'enregistrement d'une unité centrale de commande U appartenant à une installation domotique 17 d'un bâtiment 1 va à présent être décrit en référence à la figure 4. Nous supposerons ici que le procédé est effectué par un terminal utilisateur mobile T, par exemple exécutant une application APP.

Dans une première étape ELRT1, un message MLR ou une instruction de d'initiation de l'enregistrement est reçu en provenance par exemple d'un utilisateur ou d'une application tierce qui émet ou communique ce message ou cette instruction respectivement dans une étape ELRUsr1 ou ELRA1. L'utilisateur peut avoir préalablement lancé l'application APP et créé ou ouvert son compte utilisateur. Il a renseigné ses identifiants UsrID, par exemple un login et mot de passe.

Le terminal est connecté dans une étape préalable ELRT2 de façon locale individuellement aux unités centrales de commande U de l'installation 17, en utilisant un protocole local, notamment un protocole sans fil, comme par exemple un protocole de type Bluetooth, Zigbee, ou encore en Wifi, soit directement, soit par l'intermédiaire d'un point d'accès qui peut intégrer dans ce cas une fonction de passerelle de protocoles (par exemple : Ethernet à WiFi/Bluetooth/ Zigbee). Les unités centrales de commande U1 et U2 acceptent cette connexion respectivement dans des étapes ELRU21 et ELRU22. Nous désignerons par la suite par terminal indifféremment le terminal ou l'application APP exécutée sur ce terminal T.

Les étapes ELRT1 et ELRT2 peuvent être interverties, la connexion pouvant être établie après réception des instructions d'initiation de l'enregistrement.

Dans une troisième étape ELRT3, un identifiant d'installation StID est généré. L'identifiant StID de l'installation domotique 17 peut être associé à un groupe UsrGrSt comprenant au moins un identifiant UsrID1 d'un utilisateur.

Dans une quatrième étape ELRT4, un message de découverte MLRD à destination des unités centrales de commande U1, U2 est envoyé, qui est reçu par lesdites unités centrales de commandes dans des étapes respectives ELRU14 et ELRU24. Selon un exemple de réalisation, le message de découverte peut correspondre à un protocole de type « Bonjour », SSDP, UPNP.

Lors de la phase de découverte, les procédés exécutés par les unités centrales de commande et par le terminal peuvent être lancés de manière coordonnée par l'utilisateur, par exemple en appuyant sur un bouton dédié de l'unité centrale de commande U1, U2 avant de lancer l'application APP sur le terminal T. Cet appui met l'unité centrale de commande U1, U2 dans un mode « découverte » pendant un intervalle de temps, durant lequel elle répond aux messages envoyés par le terminal T. Cette procédure sécurise l'appairage, par la proximité entre l'utilisateur et l'unité centrale de commande U1, U2 ; et simplifie le transfert de données d'identification, car l'utilisateur ne doit pas saisir manuellement des numéros de série et des certificats qui sont assez longs. En effet, les identifiants sont uniques pour chaque l'unité centrale de commande U1, U2 produite par un fabricant.

Par la suite, la première unité centrale de commande U1 envoie, en réponse au message de découverte MLRD, dans une étape ELRU15, un message de signalement MLRSU1 en lien avec un premier identifiant unique UID1 de ladite première unité centrale de commande U1, qui est reçu par le terminal dans une étape ELRT5. La première unité centrale de commande U1 envoie également un message de description de topologie MLRTU1 comprenant une description d'un groupe de dispositifs DGrU1 rattaché à l'unité centrale de commande U1.

Dans une étape ELRT6, il est procédé au rattachement du premier identifiant UID1 de la première unité centrale de commande U1 à l'identifiant de l'installation StID et à l'enregistrement local de ce rattachement dans l'application APP sur le terminal T ;
Dans une étape ELRT7, il est procédé à l'enregistrement du groupe de dispositifs DGrU1 en lien avec l'identifiant de l'installation StID dans un groupe de dispositif rattaché à l'installation DGrSt.

La seconde unité centrale de commande U2 envoie également, en réponse au message de découverte MLRD, dans une étape ELRU28, un message de signalement MLRSU2 en lien avec un deuxième identifiant unique UID2 de ladite deuxième unité centrale de commande U2, qui est reçu par le terminal dans une étape ELRT8. La deuxième unité centrale de commande U2 envoie également un message de description de topologie MLRTU2 comprenant une description d'un groupe de dispositifs DGrU2 rattaché à l'unité centrale de commande U2.

Pour chaque dispositif D, une unité centrale de commande peut également communiquer des commandes et paramètres associés à ces dispositifs. Les commandes peuvent être déduites par le terminal à partir du type de dispositif ou bien présentes par défaut dans l'application sur le terminal T, la liste des dispositifs servant à valider l'utilisation de ces commandes, si un dispositif de ce type est présent.

Dans une étape ELRT9, il est procédé au rattachement du deuxième identifiant UID2 de la deuxième unité centrale de commande U2 à l'identifiant de l'installation StID et à l'enregistrement local de ce rattachement dans l'application APP sur le terminal T ;
Dans une étape ELRT10, il est procédé à l'enregistrement du groupe de dispositifs DGrU2 en lien avec l'identifiant de l'installation StID dans un groupe de dispositif rattaché à l'installation DGrSt.

L'identifiant de l'installation StID de l'installation domotique 17 est donc associée à un groupe UGrSt comprenant au moins les identifiants UID1, UID2 de la première unité centrale de commande U1 et de la deuxième unité centrale de commande U2.

De la même façon, l'identifiant StID de l'installation domotique 17 est associée à un groupe DGrSt de dispositifs regroupant les dispositifs contenus dans au moins le premier groupe DGrU1 de dispositifs attaché à la première unité centrale de commande U1 et au moins le deuxième groupe DGrU2 de dispositifs attaché à la deuxième unité centrale de commande U2.

Ainsi, les dispositifs sont considérés comme rattachés à au même identifiant d'une installation, dans un groupe qui rassemble l'ensemble des dispositifs de l'installation rattachés indifféremment à la première ou à la seconde unité centrale de commande qui peut être communiqué à un utilisateur ou à une application tierce.

Il est possible de prévoir une étape additionnelle ELRT11 dans laquelle un message MLRStID comprenant l'identifiant StID de l'installation domotique 17 est envoyé aux unités de commande U1 et U2 rattachées audit identifiant StID, en vue de son enregistrement sur les unités électroniques de commande U1, U2 dans des étapes respectives ELRU111 et ELRU211.

A ce stade, l'enregistrement local sur le terminal peut être considéré comme terminé.

Une information en retour à l'utilisateur USr ou à une application tierce A peut être communiquée dans une étape ELRT12 sous forme d'un message de réponse MLRRp qui le reçoivent dans une étape ELRUsr12 ou ELRA12 respectivement.

Il est également possible de procéder pour le terminal, dans la même étape ELRT12 ou postérieurement à une présentation sur l'interface du terminal T une interface permettant la commande ou le contrôle des dispositifs appartenant au groupe DGrSt, indépendamment de leur rattachement à une unité centrale de commande U1 ou U2.

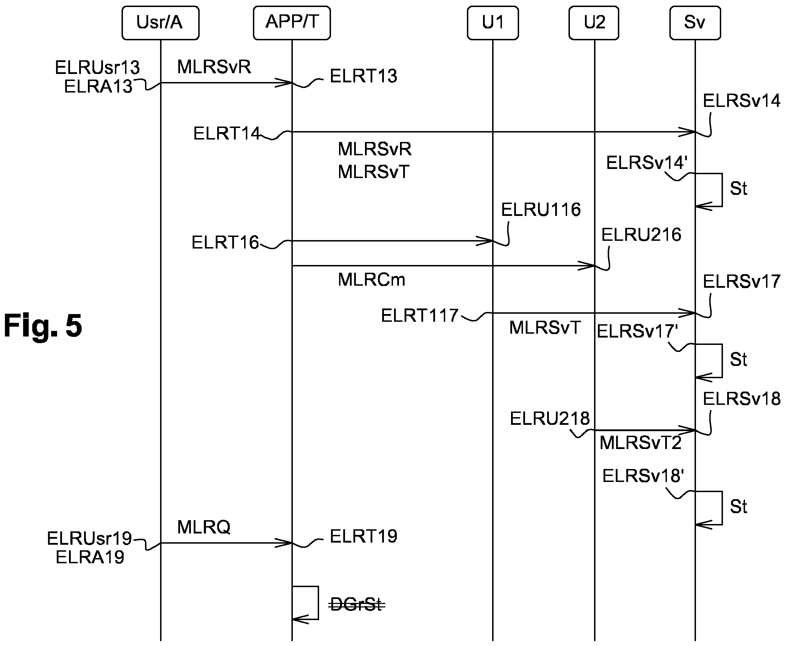

L'enregistrement local peut être répercuté au serveur Sv en réalisant les étapes suivantes, décrites sur la figure 5.

Cette propagation des informations peut être automatique, ou sollicitée par un utilisateur ou une application tierce dans une étape ELRUsr13 ou ELRA13, le terminal recevant cette instruction ou ce message MLRSvR dans une étape ELRT13.

Le terminal T envoie dans une étape ELRT14 un message de requête d'enregistrement MLRSvR à destination du Serveur Sv comprenant l'identifiant de l'installation StID et les identifiants des unités centrales de commande UID1, UID2 associés compris dans le groupe UGrSt, le serveur recevant ce message dans une étape ELRSv12. Le serveur peut ainsi créer une entité représentative St correspondant à l'installation domotique définie. Le terminal T peut également envoyer les données relatives aux dispositifs rattachés à l'identifiant StID du groupe DGrSt pour la constitution de cette entité représentative.

Le terminal T envoie par ailleurs dans une étape ELRT15 un message de demande de communication MLRCm à destination des unités centrales de commande U1 et U2 rattachées à l'identifiant de l'installation StID, en vue de l'établissement d'une communication par l'unité centrale de commande U vers le Serveur Sv pour communiquer au serveur Sv des informations relatives à ladite unité centrale de commande U et optionnellement à une description du groupe de dispositifs DGrU1, DGrU2 rattaché à l'unité centrale de commande U1, U2, mais également en vue de collecter des commandes en provenance du Serveur Sv.

En particulier, cette étape peut correspondre à une demande d'établissement de connexion TCP/IP des unités centrales de commande U vers le serveur Sv, sur ordre de l'utilisateur.

L'ordre des étapes ELRT14 et ELRT15 est indifférent.

La réalisation effective des communications entre les unités centrales de commande U1, U2, est figurée sur le dessin par les étapes ELRU116/ELRSv16 et ELRU217/ELRSv17 respectivement. Lors de ces communications, les unités centrales de commande envoient au serveur des messages applicatifs contenant leur identifiant UID1 ou UID2, et optionnellement la liste des dispositifs pilotables par son intermédiaire, éventuellement les commandes reconnues par chaque dispositif/type de dispositif et les paramètres/variables d'état associés à ces dispositifs.

Pour renforcer la sécurité de la création de l'entité représentative St correspondant à l'installation domotique définie, le serveur Sv peut conditionner cette création par la réception pendant un intervalle de temps prédéfini du message MLRSvR en provenance du terminal T, et des messages applicatifs en provenance des unités centrales de commande U1, U2.

Des mises à jour des informations concernant les dispositifs associés à l'installation sont ainsi effectuées par des messages que nous désignerons de façon générique comme message de description de topologie MLRSvT. Il peut s'agir de l'ajout ou de la suppression d'un dispositif rattaché à une unité centrale de commande, des paramètres changés lors d'une connexion de l'utilisateur en mode local, etc. Ainsi, un utilisateur qui se connecte via Internet à son installation domotique par l'intermédiaire du serveur Sv a une « vue » à jour de l'installation.

Lors de la déconnexion de l'application, demandée par l'utilisateur dans une étape ELUsr18 / ELRA18 par une requête ou une instruction de sortie MLRQ, le terminal T procède, dans une étape ELRT18 à la fermeture de la connexion entre le terminal utilisateur T et les unités centrales de commande U1, U2, et à l'invalidation de l'enregistrement du groupe de dispositif rattaché à l'installation DGrSt, l'enregistrement du rattachement de l'au moins un identifiant UID de l'au moins une unité centrale de commande à l'identifiant de l'installation StID étant conservé.

Lors d'une nouvelle connexion à l'application, une nouvelle découverte sera réalisée par l'application, mais en connaissant déjà les identifiants UID1, UID2 des unités centrales rattachées à l'identifiant d'installation StID.

Il suffira que les unités centrales retournent les messages de description de topologie MLRTU1, MLRTU2. Ces dispositions permettent d'avoir une vue à jour de l'installation.

## Revendications

1. Procédé d'enregistrement d'une unité centrale de commande (U) appartenant à une installation domotique (17); le procédé étant exécuté par un terminal utilisateur (T) d'une installation domotique (17) et comprenant:
i. établissement (ELRT2) d'une connexion entre le terminal utilisateur (T) et une première unité centrale de commande (U) ; le procédé étant **caractérisé en ce qu'**il comprend en outre:
ii. création (ELRT3) d'un identifiant d'installation (StID) de l'installation domestique (17);
iii. envoi (ELRT4) d'un message de découverte (MD) ;
iv. réception (ELRT5, ELRT8) d'un premier message de signalement (MLRSU) émis par la première unité centrale de commande (U, U1, U2) pour l'installation (17) en lien avec un premier identifiant unique (UID) de ladite première unité centrale de commande (U, U1, U2),
v. enregistrement (ELRT6, ELRT9) d'un rattachement du premier identifiant unique (UID) de la première unité centrale de commande (U, U1, U2) à l'identifiant d'installation (StID).

2. Procédé d'enregistrement selon la revendication 1, comprenant en outre:
- réception (ELRT5, ELRT8) d'au moins un premier message de description de topologie (MLRTU1, MLRTU2) comprenant une description d'un premier groupe de dispositifs (DGrU1, DGrU2) rattaché à la première unité centrale de commande (U, U1, U2).
- enregistrement (ELRT7, ELRT10) du premier groupe de dispositifs (DGrU1, DGrU2) en lien avec l'identifiant d'installation (StID).

3. Procédé d'enregistrement selon l'une quelconque des revendications 1 ou 2, comprenant en outre:
- une deuxième étape de réception (ELRT8) d'un deuxième message de signalement (MLRSU2) émis par une deuxième unité centrale de commande (U2) pour l'installation (17) en lien avec un deuxième identifiant unique (UID2) de ladite deuxième unité centrale de commande (U2) ; et
- une deuxième étape d'enregistrement (ELRT9) d'un rattachement du deuxième identifiant unique (UID2) de la deuxième unité centrale de commande (U2) à l'identifiant d'installation (StID) ; l'identifiant d'installation (StID) étant associé à un groupe (UGrSt) comprenant au moins les identifiants uniques (UID1, UID2) de la première unité centrale de commande (U1) et de la deuxième unité centrale de commande (U2).

4. Procédé d'enregistrement selon la revendication 3, comprenant en outre:
- une deuxième étape de réception (ELRT8) d'un deuxième message de description de topologie (MLRTU2) comprenant une description d'un deuxième groupe de dispositifs (DGrU2) rattaché à la deuxième unité centrale de commande (U2);
- une deuxième étape d'enregistrement (ELRT10) du deuxième groupe de dispositifs (DGrU1) en lien avec l'identifiant d'installation; l'identifiant d'installation (StID) étant associé au groupe (DGrSt) de dispositifs regroupant les dispositifs contenus dans au moins le premier groupe (DGrU1) de dispositifs attaché à la première unité centrale de commande (U1) et au moins le deuxième groupe (DGrU2) de dispositifs attaché à la deuxième unité centrale de commande (U2).

5. Procédé d'enregistrement selon l'une quelconque des revendications 1 à 4, comprenant en outre l'étape suivante :
- envoi (ELRT11) d'un message (MLRStID) comprenant l'identifiant d'installation (StID) à la première unité de commande (U, U1, U2) rattachée audit identifiant d'installation (StID).

6. Procédé d'enregistrement selon l'une quelconque des revendications 1 à 5, dans lequel l'identifiant d'installation (StID) est associé à un groupe (UsrGrSt) comprenant au moins un identifiant (UsrID1) d'un utilisateur.

7. Procédé d'enregistrement selon l'une quelconque des revendications 1 à 6, comprenant en outre:
- envoi (ELRT14) d'un message d'enregistrement (MLRSvR) à destination d'une unité de gestion (Sv), ce message d'enregistrement comprenant l'identifiant d'installation (StID) et le premier identifiant unique de la première unité centrale de commande (UID).

8. Procédé d'enregistrement selon l'une quelconque des revendications 1 à 7 comprenant en outre:
- envoi (ELRT14) à destination d'une unité de gestion (Sv) d'un message de description de topologie (MLRSvT) comprenant une description d'un groupe de dispositifs (DGrSt) rattaché à l'identifiant d'installation (StID).

9. Procédé d'enregistrement selon la revendication 8, comprenant en outre:
- envoi (ELRT16) d'un message de demande de communication (MLRCm) à destination de la première unité centrale de commande (U, U1, U2) rattachée à l'identifiant de l'installation (StID).

10. Procédé d'enregistrement selon l'une quelconque des revendications 1 à 9, comprenant en outre:
- fermeture de la connexion entre le terminal utilisateur (T) et la première unité centrale de commande (U);
- invalidation (ELRT19) de l'enregistrement du premier groupe de dispositifs rattaché à l'installation (DGrSt), l'enregistrement du rattachement du premier identifiant unique (UID) de la première unité centrale de commande à l'identifiant d'installation (StID) étant conservé.

11. Produit programme d'ordinateur comprenant des instructions de code agencées pour mettre en oeuvre les étapes du procédé selon l'une quelconque des revendications 1 à 10, lorsque ledit programme est exécuté par un processeur d'un terminal utilisateur (T).

12. Procédé d'enregistrement d'une unité centrale de commande (U) appartenant à une installation domotique (17) ayant un identifiant d'installation (StID); le procédé étant exécuté par une unité de gestion (Sv) et comprenant:
- réception (ELRSv14) d'un message d'enregistrement (MLRSvR) en provenance d'un terminal utilisateur (T) comprenant l'identifiant d'installation (StID) et un identifiant unique (UID) d'une unité centrale de commande (U, U1, U2); le procédé étant **caractérisé en ce qu'**il comprend en outre:
- création (ELRSv15) ou mise à jour d'une entité représentative (St) de l'installation (17), l'entité représentative (St) correspondant à l'identifiant d'installation (StID) et étant associée à un groupe (UGrSt) comprenant l'identifiant unique (UID) de l' unité centrale de commande (U, U1, U2).

13. Procédé d'enregistrement selon la revendication 12, comprenant en outre:
- réception (ELRSv14) d'un message de description de topologie (MLRSvT) en provenance d'un terminal utilisateur (T) comprenant une description ou une mise à jour d'une description d'un groupe de dispositifs (DGrSt) rattaché à l'identifiant d'installation (StID); et
- rattachement (ELRSv15) à l'entité représentative (St) du groupe de dispositifs (DGrST).

14. Procédé d'enregistrement selon l'une quelconque des revendications 12 ou 13, comprenant en outre:
- réception (ELRSv17, ELRSv18) d'un message de description de topologie (MLRSvT) en provenance de l'unité centrale de commande (U, U1, U2) rattachée à l'identifiant d'installation (StID), le message de description de topologie une description ou une mise à jour d'une description d'un groupe de dispositifs (DGrU1, DGrU2) rattaché à ladite unité centrale de commande (U, U1, U2) ; et
- mise à jour (ELRSv17', ELRSv18') d'un groupe de dispositifs (DGrSt) rattaché à l'entité représentative (St) sur la base de la description ou de la mise à jour de la description du groupe de dispositifs (DGrU1, DGrU2) rattaché à ladite unité centrale de commande (U, U1, U2).

15. Produit programme d'ordinateur comprenant des instructions de code agencées pour mettre en oeuvre les étapes du procédé selon l'une quelconque des revendications 12 à 14, lorsque ledit programme est exécuté par un processeur d'une unité de gestion (Sv).

## Patentansprüche

1. Verfahren zum Registrieren einer zentralen Steuereinheit (U), die zu einer Heimautomatisierungsanlage (17) gehört; wobei das Verfahren von einem Anwenderendgerät (T) einer Heimautomatisierungsanlage (17) ausgeführt wird und umfasst:
i. Aufbauen (ELRT2) einer Verbindung zwischen dem Anwenderendgerät (T) und einer ersten zentralen Steuereinheit (U);
wobei das Verfahren **dadurch gekennzeichnet ist, dass** es weiter umfasst:
ii. Erzeugen (ELRT3) einer Anlagenkennung (StID) der Heimautomatisierungsanlage (17);
iii. Senden (ELRT4) einer Erkennungsnachricht (MD);
iv. Empfangen (ELRT5, ELRT8) einer ersten Signalisierungsnachricht (MLRSU), die von der ersten zentralen Steuereinheit (U, U1, U2) für die Anlage (17) in Verbindung mit einer ersten eindeutigen Kennung (UID) der ersten zentralen Steuereinheit (U, U1, U2) ausgegeben wird,
v. Registrieren (ELRT6, ELRT9) einer Verknüpfung der ersten eindeutigen Kennung (UID) der ersten zentralen Steuereinheit (U, U1, U2) mit der Anlagenkennung (StID).

2. Registrierungsverfahren nach Anspruch 1, weiter umfassend:
- Empfangen (ELRT5, ELRT8) von mindestens einer ersten Topologiebeschreibungsnachricht (MLRTU1, MLRTU2), die eine Beschreibung einer ersten Gruppe von Vorrichtungen (DGrU1, DGrU2) umfasst, welche mit der ersten zentralen Steuereinheit (U, U1, U2) verknüpft ist,
- Registrieren (ELRT7, ELRT10) der ersten Gruppe von Vorrichtungen (DGrU1, DGrU2) in Verbindung mit der Anlagenkennung (StID).

3. Registrierungsverfahren nach einem der Ansprüche 1 oder 2, weiter umfassend:
- einen zweiten Schritt des Empfangens (ELRT8) einer zweiten Signalisierungsnachricht (MLRSU2), die von einer zweiten zentralen Steuereinheit (U2) für die Anlage (17) in Verbindung mit einer zweiten eindeutigen Kennung (UID2) der zweiten zentralen Steuereinheit (U2) ausgegeben wird; und
- einen zweiten Schritt des Registrierens (ELRT9) einer Verknüpfung der zweiten eindeutigen Kennung (UID2) der zweiten zentralen Steuereinheit (U2) mit der Anlagenkennung (StID);
wobei die Anlagenkennung (StID) einer Gruppe (UGrSt) zugeordnet ist, die mindestens die eindeutigen Kennungen (UID1, UID2) der ersten zentralen Steuereinheit (U1) und der zweiten zentralen Steuereinheit (U2) umfasst.

4. Registrierungsverfahren nach Anspruch 3, weiter umfassend:
- einen zweiten Schritt des Empfangens (ELRT8) einer zweiten Topologiebeschreibungsnachricht (MLRTU2), die eine Beschreibung einer zweiten Gruppe von Vorrichtungen (DGrU2) umfasst, die mit der zweiten zentralen Steuereinheit (U2) verknüpft ist;
- einen zweiten Schritt des Registrierens (ELRT10) der zweiten Gruppe von Vorrichtungen (DGrU1) in Verbindung mit der Anlagenkennung;
wobei die Anlagenkennung (StID) der Gruppe (DGrSt) von Vorrichtungen zugeordnet ist, die die Vorrichtungen zusammenfasst, welche in mindestens der mit der ersten zentralen Steuereinheit (U1) verknüpften ersten Gruppe (DGrU1) von Vorrichtungen, und mindestens der mit der zweiten zentralen Steuereinheit (U2) verknüpften zweiten Gruppe (DGrU2) von Vorrichtungen enthalten sind.

5. Registrierungsverfahren nach einem der Ansprüche 1 bis 4, weiter den folgenden Schritt umfassend:
- Senden (ELRT11) einer Nachricht (MLRStID), die die Anlagenkennung (StID) umfasst, an die erste Steuereinheit (U, U1, U2), die mit der Anlagenkennung (StID) verknüpft ist.

6. Registrierungsverfahren nach einem der Ansprüche 1 bis 5, wobei die Anlagenkennung (StID) einer Gruppe (UsrGrSt) zugeordnet ist, die mindestens eine Kennung (UsrID1) eines Anwenders umfasst.

7. Registrierungsverfahren nach einem der Ansprüche 1 bis 6, weiter umfassend:
- Senden (ELRT14) einer Registrierungsnachricht (MLRSvR) an eine Verwaltungseinheit (Sv), wobei diese Registrierungsnachricht die Anlagenkennung (StID) und die erste eindeutige Kennung der ersten zentralen Steuereinheit (UID) umfasst.

8. Registrierungsverfahren nach einem der Ansprüche 1 bis 7, weiter umfassend:
- Senden (ELRT14) einer Topologiebeschreibungsnachricht (MLRSvT), die eine Beschreibung einer mit der Anlagenkennung (StID) verknüpften Gruppe von Vorrichtungen (DGrSt) umfasst, an eine Verwaltungseinheit (Sv).

9. Registrierungsverfahren nach Anspruch 8, weiter umfassend:
- Senden (ELRT16) einer Kommunikationsanfragenachricht (MLRCm) an die erste zentrale Steuereinheit (U, U1, U2), die mit der Anlagenkennung (StID) verknüpft ist.

10. Registrierungsverfahren nach einem der Ansprüche 1 bis 9, weiter umfassend:
- Schließen der Verbindung zwischen dem Anwenderendgerät (T) und der ersten zentralen Steuereinheit (U);
- Ungültigmachen (ELRT19) der Registrierung der mit der Anlage verknüpften ersten Gruppe von Vorrichtungen (DGrST),
wobei die Registrierung der Verknüpfung der ersten eindeutigen Kennung (UID) der ersten zentralen Steuereinheit mit der Anlagenkennung (StID) beibehalten wird.

11. Computerprogrammprodukt, das Codeanweisungen umfasst, die dafür eingerichtet sind, die Schritte des Verfahrens nach einem der Ansprüche 1 bis 10 umzusetzen, wenn das Programm von einem Prozessor eines Anwenderendgeräts (T) ausgeführt wird.

12. Verfahren zum Registrieren einer zentralen Steuereinheit (U), die zu einer Heimautomatisierungsanlage (17) gehört, welche eine Anlagenkennung (StID) aufweist; wobei das Verfahren von einer Verwaltungseinheit (Sv) ausgeführt wird und umfasst:
- Empfangen (ELRSv14) einer Registrierungsnachricht (MLRSvR) von einem Anwenderendgerät (T), die die Anlagenkennung (StID) und eine eindeutige Kennung (UID) einer zentralen Steuereinheit (U, U1, U2) umfasst;
wobei das Verfahren **dadurch gekennzeichnet ist, dass** es weiter umfasst:
- Erzeugen (ELRSv15) oder Aktualisieren einer repräsentativen Entität (St) der Anlage (17), wobei die repräsentative Entität (St) der Anlagenkennung (StID) entspricht und einer Gruppe (UGrSt) zugeordnet ist, die die eindeutige Kennung (UID) der zentralen Steuereinheit (U, U1, U2) umfasst.

13. Registrierungsverfahren nach Anspruch 12, weiter umfassend:
- Empfangen (ELRSv14) einer Topologiebeschreibungsnachricht (MLRSvt) von einem Anwenderendgerät (T), die eine Beschreibung oder eine Aktualisierung einer Beschreibung einer mit der Anlagenkennung (StID) verknüpften Gruppe von Vorrichtungen (DGrST) umfasst; und
- Verknüpfen (ELRSv15) der Gruppe von Vorrichtungen (DGrST) mit der repräsentativen Entität (St).

14. Registrierungsverfahren nach einem der Ansprüche 12 oder 13, weiter umfassend:
- Empfangen (ELRSv17, ELRSv18) einer Topologiebeschreibungsnachricht (MLRSvT) von der zentralen Steuereinheit (U, U1, U2), die mit der Anlagenkennung (StID) verknüpft ist, wobei die Topologiebeschreibungsnachricht eine Beschreibung oder eine Aktualisierung einer Beschreibung einer Gruppe von Vorrichtungen (DGrU1, DGrU2), die mit der zentralen Steuereinheit (U, U1, U2) verknüpft ist; und
- Aktualisieren (ELRSv17', ELRSv18') einer Gruppe von Vorrichtungen (DGrSt), die mit der repräsentativen Entität (St) verknüpft ist, auf Basis der Beschreibung oder der Aktualisierung der Beschreibung der Gruppe von Vorrichtungen (DGrU1, DGrU1), die mit der zentralen Steuereinheit (U, U1, U2) verknüpft ist.

15. Computerprogrammprodukt, das Codeanweisungen umfasst, die dafür eingerichtet sind, die Schritte des Verfahrens nach einem der Ansprüche 12 bis 14 umzusetzen, wenn das Programm von einem Prozessor einer Verwaltungseinheit (Sv) ausgeführt wird.

## Claims

1. A method for registering a central control unit (U) belonging to a home automation installation (17); the method being executed by a user terminal (T) of a home automation installation (17), and comprising:
i. Establishing (ELRT2) a connection between the user terminal (T) and a first central control unit (U);
the method being **characterized in that** it further comprises:
ii. Creating (ELRT3) an installation identifier (StID) of the home automation installation (17);
iii. Sending (ELRT4) a discovery message (MD);
iv. Receiving (ELRT5, ELRT8) a first signaling message (MLRSU) transmitted by the first central control unit (U, U1, U2) for the installation (17) in connection with a first unique identifier (UID) of said first central control unit (U, U1, U2),
v. Registering (ELRT6, ELRT9) an attachment of the first unique identifier (UID) of the first central control unit (U, U1, U2) to the installation identifier (StID).

2. The registering method according to claim 1, further comprising:
- Receiving (ELRT5, ELRT8) at least one first topology description message (MLRTU1, MLRTU2) comprising a description of a first group of devices (DGrU1, DGrU2) attached to the first central control unit (U, U1, U2).
- Registering (ELRT7, ELRT10) the first group of devices (DGrU1, DGrU2) in connection with the installation identifier (StID).

3. The registering method according to any one of claims 1 or 2, further comprising:
- A second step of receiving (ELRT8) a second signaling message (MLRSU2) transmitted by a second central control unit (U2) for the installation (17) in connection with a second unique identifier (UID2) of said second central control unit (U2); and
- A second step of registering (ELRT9) an attachment of the second unique identifier (UID2) of the second central control unit (U2) to the installation identifier (StID);
The installation identifier being associated with a group (UGrSt) comprising at least the unique identifiers (UID1, UID2) of the first central control unit (U1) and the second central control unit (U2).

4. The registering method according to claim 3, further comprising:
- A second step of receiving (ELRT8) a second topology description message (MLRTU2) comprising a description of a second group of devices (DGrU2) attached to the second central control unit (U2);
- A second step of registering (ELRT10) the second group of devices (DGrU1) in connection with the installation identifier;
The installation identifier (StID) being associated with the group of devices (DGrSt) grouping together the devices contained in at least the first group of devices (DGrU1) attached to the first central control unit (U1) and at least the second group devices (DGrU2) attached to the second central control unit (U2).

5. The registering method according to any one of claims 1 to 4, further comprising the following step:
- Sending (ELRT11) a message (MLRStID) comprising the installation identifier (StID) to the first control unit (U, U1, U2) attached to said installation identifier (StID).

6. The registering method according to any one of claims 1 to 5, wherein the installation identifier (StID) is associated with a group (UsrGrSt) comprising at least one identifier (UsrID1) of a user.

7. The registering method according to any one of claims 1 to 6, further comprising:
- Sending (ELRT14) a registration message (MLRSvR) to a management unit (Sv), this registration message comprising the installation identifier (StID) and the first unique identifier of the first central control unit (UID).

8. The registering method according to any one of claims 1 to 7, further comprising:
- Sending (ELRT14) a topology description message (MLRSvT) to a management unit (Sv) comprising a description of a group of devices (DGrSt) attached to the installation identifier (StID).

9. The registering method according to claim 8, further comprising:
- Sending (ELRT16) a communication request message (MLRCm) to the first central control unit (U, U1, U2) attached to the installation identifier (StID).

10. The registering method according to any one of claims 1 to 9, further comprising:
- Closing the connection between the user terminal (T) and the first central control unit (U);
- Invalidating (ELRT19) the registration of the first group of devices attached to the installation (DGrSt),
The registration of the attachment of the first unique identifier (UID) of the first central control unit to the installation identifier (StID) being preserved.

11. A computer program product comprising code instructions arranged to implement the steps of the method according to any one of claims 1 to 10, when said program is executed by a processor of a user terminal (T).

12. The method for registering a central control unit (U) belonging to a home automation installation (17) having an installation identifier (StID); the method being executed by a management unit (Sv) and comprising:
- Receiving (ELRSv14) a registration message (MLRSvR) from a user terminal (T) comprising the installation identifier (StID) and a unique identifier (UID) of a central control unit (U, U1, U2);
The method being **characterized in that** it further comprises:
- Creating (ELRSv15) or updating a representative entity (St) of the installation (17), the representative entity (St) corresponding to the installation identifier (StID) and being associated with a group (UGrSt) comprising the unique identifier (UID) of the central control unit (U, U1, U2).

13. The registering method according to claim 12, further comprising:
- Receiving (ELRSv14) a topology description message (MLRSvT) from a user terminal (T) comprising a description or an update of a description of a group of devices (DGrSt) attached to the installation identifier (StID); and
- Attaching (ELRSv15) the group of devices (DGrST) to the representative entity (St).

14. The registering method according to any one of claims 12 or 13, further comprising:
- Receiving (ELRSv17, ELRSv18) a topology description message (MLRSvT) from the central control unit (U, U1, U2) attached to the installation identifier (StID), the topology description message comprising a description or an update of a description of a group of devices (DGrU1, DGrU2) attached to said central control unit (U, U1, U2); and
- Updating (ELRSv17', ELRSv18') a group of devices (DGrSt) attached to the representative entity (St) based on the description or update of the description of the group of devices (DGrU1, DGrU2) attached to said central control unit (U, U1, U2).

15. The computer program product comprising code instructions arranged to implement the steps of the method according to any one of claims 12 to 14, when said program is executed by a processor of a management unit (Sv).
